# EUROPEAN PATENT APPLICATION

(11) **EP 4 593 092 A1**
(43) Date of publication of application: **30.07.2025**
(21) Application number: 22964880.3
(22) Date of filing: 11.11.2022
(51) Int. Cl.: H01M 4/04

(54) **PREPARATION METHOD FOR POSITIVE ELECTRODE SLURRY, SECONDARY BATTERY, BATTERY PACK AND ELECTRIC DEVICE**

(71) Applicant: Contemporary Amperex Technology (Hong Kong) Limited, Central (HK)
(72) Inventor: XING, Qi, Ningde, Fujian 352100 (CN); OUYANG, Chuying, Ningde, Fujian 352100 (CN); SUN, Chengdong, Ningde, Fujian 352100 (CN); LIU, Huihui, Ningde, Fujian 352100 (CN); DUAN, Lianwei, Ningde, Fujian 352100 (CN)
(74) Representative: Jacob, Reuben Ellis
(86) International application number: PCT/CN2022/131514
(87) International publication number: WO 2024/098412

(57) **Abstract**

Provided in the present application are a preparation method for a positive electrode slurry, a secondary battery, a battery pack and an electric device. The preparation method comprises first stirring, second stirring and third stirring, wherein the first stirring involves stirring a binder and a solvent to prepare a glue solution; the second stirring involves stirring a positive electrode active material and a conductive agent with the glue solution to prepare a mixture; and the third stirring involves stirring the binder and the solvent with the mixture to obtain a positive electrode slurry. The binder and the solvent in the first stirring are respectively the same as the binder and the solvent in the third stirring; based on the total mass of the binder in the first stirring and the binder in the third stirring, the mass ratio of the binder in the first stirring is 50-70%, and the mass ratio of the binder in the third stirring is 30-50%; and based on the total mass of the solvent in the first stirring and the solvent in the third stirring, the mass ratio of the solvent in the first stirring is 50-70%, and the mass ratio of the solvent in the third stirring is 30-50%.

## Description

### TECHNICAL FIELD

The present application relates to the technical field of secondary batteries, in particular to a preparation method for a positive electrode slurry, a secondary battery, a battery pack and an electrical apparatus.

### BACKGROUND

In recent years, with the increasingly wide use of secondary batteries, secondary batteries are widely used in energy storage power systems such as water power, thermal power, wind power and solar power stations, as well as power tools, electric bicycles, electric motorcycles, electric vehicles, military equipment, aerospace and other fields.

Electrode slurry is the basis for forming electrodes and is also the first process in secondary battery production. The properties of the electrode slurry have a significant impact on subsequent electrode production and battery performance. Positive electrode slurry is mainly a solid-liquid phase mixed system formed by positive electrode active materials, conductive agents, binders and solvents. The system is in a metastable state, and a slurry mixing process, that is, the slurry preparation method, has a crucial impact on the dispersion, uniformity, stability and other properties of the slurry. The slurry mixing process in the prior art is often a one-step method, where slurry is obtained by directly mixing and stirring components in positive electrode active slurry. However, the one-step preparation method cannot meet the manufacturing needs of binders with different weight average molecular weights, and the slurry mixing process has poor versatility, which is not conducive to reducing manufacturing costs. Therefore, it is necessary to develop a new preparation method for a slurry, which is suitable for binders with different weight average molecular weights.

### SUMMARY

The present application is made in view of the above-mentioned issues, and is intended to provide a preparation method for a positive electrode slurry of a secondary battery, so as to adapt to binders with different weight average molecular weights, broaden a process window for positive electrode slurry coating, and improve the processability of the positive electrode slurry.

In order to achieve the above-mentioned purpose, the present application provides a preparation method for a positive electrode slurry, including first stirring, second stirring and third stirring; wherein in the first stirring, a binder and a solvent are mixed and stirred to prepare a glue solution, and in the second stirring, a positive electrode active material and a conductive agent are mixed and stirred with the glue solution to prepare a mixture; in the third stirring, a binder and a solvent are mixed and stirred with the mixture to obtain positive electrode slurry; the binder and the solvent used in the first stirring are respectively the same as the binder and the solvent used in the third stirring, based on a total mass of the binder used in the first stirring and the binder used in the third stirring, a mass ratio of the binder used in the first stirring is 50%-70%, and a mass ratio of the binder used in the third stirring is 30%-50%; and based on a total mass of the solvent used in the first stirring and the solvent used in the third stirring, a mass ratio of the solvent used in the first stirring is 50%-70%, and a mass ratio of the solvent used in the third stirring is 30%-50%.

Therefore, the preparation method for the positive electrode slurry disclosed in the present application is more versatile than existing methods for preparing positive electrode slurry, and is suitable for slurry including binders with different weight average molecular weights. Compared with the existing preparation methods, the present application adopts stepwise slurry mixing to reduce discharge viscosity of the positive electrode slurry, alleviate a gelation phenomenon of the positive electrode slurry and improve applicability of the preparation method to a binder with a large molecular weight, and the preparation method has wider universality, broadens a process window of positive electrode slurry coating, and improves processability of the positive electrode slurry.

In any of embodiments, the binder includes at least one polyvinylidene fluoride with a weight average molecular weight of 0.15 million to 1.5 million.

The preparation method disclosed in the present application is universally applicable to a polyvinylidene fluoride binder with a low molecular weight and a polyvinylidene fluoride binder with a high molecular weight, and can effectively alleviate the gelation phenomenon of different slurry, help to improve production efficiency, and broaden the coating window of the slurry. The preparation method disclosed in the present application is applicable to the binder with a weight average molecular weight of up to 1,500,000, so that slurry including the binder with a high weight average molecular weight still has low discharge viscosity and gel resistance and can meet use demands of a new generation binder.

In any of embodiments, the binder at least includes two types of polyvinylidene fluoride, which have weight average molecular weights in a difference of no more than 1,500,000.

The applicant unexpectedly discovered that the preparation method disclosed in the present application can be effectively adapted to positive electrode slurries including binders of various weight average molecular weights. Different from the prior art where binders with different molecular weights are prone to causing a phenomenon of aggravating slurry gelation, the positive electrode slurry prepared by the method of the present application can effectively apply properties of the polyvinylidene fluoride binders with different molecular weights, and the gelation phenomenon of the slurry is further alleviated through mutual cooperation of large and small chain segments and an effect of steric hindrance.

In any of embodiments, for the first stirring, a revolution velocity is 20 rpm to 40 rpm, and an autorotation velocity is 100 rpm to 800 rpm. A velocity of the first stirring within a suitable range can make the slurry have good gelation resistance and good sedimentation resistance at the same time.

In any of embodiments, a stirring duration of the first stirring is in a range from 20 minutes to 50 minutes. A duration of the first stirring within a suitable range helps to further alleviate the gelation phenomenon of the slurry and improve the manufacturability of the slurry.

In any of embodiments, an autorotation velocity of the second stirring is 800 rpm to 1500 rpm. The autorotation velocity of the second stirring within a suitable range helps to further alleviate the gelation phenomenon of the slurry and improve the manufacturability of the slurry.

In any of embodiments, a revolution velocity of the second stirring is 5 rpm to 10 rpm greater than the revolution velocity of the first stirring. The revolution velocity of the second stirring within a suitable range can make the slurry have good gelation resistance and sedimentation resistance at the same time.

In any of embodiments, a stirring duration of the second stirring is in a range from 30 minutes to 80 minutes. A duration of the second stirring within a suitable range can make the slurry have good gelation resistance and sedimentation resistance at the same time.

In any of embodiments, a stirring duration of the third stirring is in a range from 100 minutes to 130 minutes. A duration of the third stirring within a suitable range can make the slurry have good gelation resistance and sedimentation resistance at the same time.

In any of embodiments, the positive electrode slurry has a solid content ranging from 60% to 75% and viscosity ranging from 10000 mPa·s to 30000 mPa·s, and the slurry prepared through the method of the present application has a high solid content, suitable viscosity and excellent processability, and can be directly used for a subsequent coating process, and thus the production efficiency can be improved.

In any of embodiments, a ratio of a mass of the positive electrode active material to a total mass of the binder is in a range from 50:1 to 60:1, and a ratio of a mass of the conductive agent to the total mass of the binder is in a range from 0.3:1 to 0.5:1. The positive electrode slurry within the above ranges not only has good processability, but also makes the formed positive electrode plate have excellent electrochemical performance.

In any of embodiments, the solvent is one or more of N-methyl-2-pyrrolidone, N,N-dimethylpropionamide, N,N-diethylpropionamide, N,N-dipropylpropionamide, N,N-dibutylpropionamide, N,N-dimethylethylpropionamide and 3-butoxy-N-methylpropionamide.

The above solvent has good solubility for a variety of binders, and can effectively disperse various materials such as binders, positive electrode active materials and conductive agents, which helps to improve the coating quality of the slurry.

A second aspect of the present application further provides positive electrode slurry, the positive electrode slurry has a solid content ranging from 60% to 75% and initial viscosity ranging from 10000 mPa·s to 30000 mPa·s, and viscosity of the positive electrode slurry is less than 50000 mPa·s after standing for 24 hours.

The slurry of the present application has a high solid content, suitable viscosity and excellent processability and storability, and can be directly used for a subsequent coating process, and thus the production efficiency can be improved.

In any of embodiments, the positive electrode slurry includes at least one polyvinylidene fluoride with a weight average molecular weight of 0.15 million to 1.5 million. The positive electrode slurry of the present application is suitable for binders with different weight average molecular weights, and can effectively alleviate a gelation phenomenon for binders with different weight average molecular weights, thereby helping to improve production efficiency and broaden a process window for slurry coating.

In any of embodiments, the binder at least includes two types of polyvinylidene fluoride, which have weight average molecular weights in a difference of no more than 1,500,000. The gelation phenomenon of the slurry can be further alleviated by including binders with different weight average molecular weights in the slurry.

In any of embodiments, the positive electrode slurry is prepared through the preparation method for the positive electrode slurry in the first aspect of the present application. The slurry formed by the preparation method of the present application has a high solid content, suitable viscosity and excellent processability, and can be directly used for the subsequent coating process, and thus the production efficiency can be improved.

A third aspect of the present application provides a secondary battery including a positive electrode plate, a separator, a negative electrode plate and an electrolyte solution. The positive electrode plate is prepared from the positive electrode slurry prepared by the preparation method for the positive electrode slurry in the first aspect. The positive electrode plate has high quality and high production efficiency.

In any of embodiments, the secondary battery is any one of a lithium-ion battery, a sodium-ion battery, a magnesium-ion battery, and a potassium-ion battery.

A fourth aspect of the present application further provides a battery module including the secondary battery according to the third aspect of the present application.

A fifth aspect of the present application provides a battery pack including the secondary battery according to the third aspect of the present application or the battery module according to the fourth aspect of the present application.

A sixth aspect of the present application provides an electrical apparatus including at least one selected from the secondary battery according to the third aspect of the present application, the battery module according to the fourth aspect of the present application or the battery pack according to the fifth aspect of the present application.

### DESCRIPTION OF DRAWINGS

Fig. 1 is a schematic diagram of a secondary battery according to an embodiment of the present application;
Fig. 2 is an exploded view of the secondary battery according to an embodiment of the present application shown in Fig. 1;
Fig. 3 is a schematic diagram of a battery module according to an embodiment of the present application;
Fig. 4 is a schematic diagram of a battery pack according to an embodiment of the present application;
Fig. 5 is an exploded view of the battery pack according to an embodiment of the present application shown in Fig. 4;
Fig. 6 is a schematic view of an electrical apparatus in which a secondary battery is used as a power source according to an embodiment of the present application.

Description of reference numerals:
1 battery pack; 2 upper box; 3 lower box; 4 battery module; 5 secondary battery; 51 case; 52 electrode assembly; 53 cover plate.

### DETAILED DESCRIPTION

Embodiments of a positive electrode active material, a manufacturing method therefor, a positive electrode plate, a secondary battery, a battery module, a battery pack, and an electrical apparatus in the present application are specifically disclosed below by referring to the detailed description of drawings as appropriate. However, there may be cases where unnecessary detailed description is omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

"Ranges" disclosed in the present application are defined in the form of lower limits and upper limits, a given range is defined by the selection of a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if the ranges of 60-120 and 80-110 are listed for a particular parameter, it is understood that the ranges of 60-110 and 80-120 are also contemplated. Additionally, if the minimum range values 1 and 2 are listed, and if the maximum range values 3, 4 and 5 are listed, the following ranges are all contemplated: 1-3, 1-4, 1-5, 2- 3, 2-4 and 2-5. In the present application, unless stated otherwise, the numerical range "a-b" represents an abbreviated representation of any combination of real numbers between a to b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all embodiments and optional embodiments of the present application may be combined with each other to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, the method comprises steps (a) and (b), meaning that the method may comprise steps (a) and (b) performed sequentially, or may comprise steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

Unless otherwise specifically stated, the terms "including" and "comprising" mentioned in the present application may be open-ended, or may be closed-ended. For example, the "including" and "comprising" may indicate that it is also possible to include or comprise other components not listed, and it is also possible to include or comprise only the listed components.

Unless otherwise specifically stated, the term "or" is inclusive in the present application. For example, the phrase "A or B" means "A, B, or both A and B." More specifically, the condition "A or B" is satisfied under any one of the following conditions: A is true (or present) and B is false (or absent); A is false (or absent) and B is true (or present); or both A and B are true (or present).

Positive electrode slurry is mainly a solid-liquid phase mixed system formed by positive electrode active materials, conductive agents, binders and solvents. In order to improve the uniformity of distribution of different components in the system, slurry mixing is often performed through stirring, ball milling, ultrasonic and other processes. However, a slurry mixing process in the prior art is usually only applicable to a slurry system with fixed components and has poor versatility, and when the physical properties of the components in the slurry change, the slurry mixing process often needs to be adjusted. For example, the slurry mixing process in the prior art cannot be applied to a binder with a high molecular weight, nor can it be applied to a binder with large weight average molecular weight dispersibility and poor batch stability. The performance of slurry made from different batches of binders using the same slurry mixing process in the prior art varies greatly, and the slurry is prone to gelation, making it difficult to meet the production demands of an electrode plate.

### [Preparation Method for positive electrode slurry]

Based on this, the present application provides a preparation method for positive electrode slurry, including first stirring, second stirring and third stirring; wherein in the first stirring, a binder and a solvent are mixed and stirred to prepare a glue solution; in the second stirring, a positive electrode active material and a conductive agent are mixed and stirred with the glue solution to prepare a mixture; in the third stirring, a binder and a solvent are mixed and stirred with the mixture to obtain positive electrode slurry; the binder and the solvent used in the first stirring are respectively the same as the binder and the solvent used in the third stirring, based on a total mass of the binder used in the first stirring and the binder used in the third stirring, a mass ratio of the binder used in the first stirring is 50%-70%, and a mass ratio of the binder used in the third stirring is 30%-50%; and based on a total mass of the solvent used in the first stirring and the solvent used in the third stirring, a mass ratio of the solvent used in the first stirring is 50%-70%, and a mass ratio of the solvent used in the third stirring is 30%-50%.

In some embodiments, the positive electrode active material is a lithium-containing transition metal oxide. In some embodiments, the positive electrode active material is at least one of lithium iron phosphate and its modified materials, lithium nickel cobalt manganese oxide and its modified materials, and the modified material is prepared by one or more modification methods of doping, conductive carbon coating, conductive metal coating, and conductive polymer coating.

In some embodiments, the conductive agent may include at least one of superconducting carbon, acetylene black, carbon black, Ketjen black, carbon dot, carbon nanotube, graphene, and carbon nanofiber.

In the preparation method, the binder and the solvent are first mixed and subjected to the first stirring to prepare the glue solution. A mass of the binder used in the first stirring is in a range from 50% to 70% of a mass of all the binders in the slurry, and a mass of the solvent used in the first stirring is in a range from 50% to 70% of a mass of all the solvents in the slurry. This step can achieve effective dispersion of the binder in the solvent and avoid agglomeration and flocculation caused by direct mixing and stirring of the binder with other materials. The positive electrode active material and the conductive agent are then mixed with the glue solution and subjected to the second stirring to prepare the mixture. The second stirring can effectively disperse the positive electrode active material and the conductive agent in the glue solution. The binder in the glue solution can improve the stability of the slurry through electrostatic action and steric hindrance, and reduce the agglomeration and sedimentation of the positive electrode active material and the conductive agent. Then the binder and the solvent are mixed with the mixture and subjected to the third stirring to obtain the positive electrode slurry, based on the total mass of the binder used in the first stirring and the binder used in the third stirring, the mass ratio of the binder used in the third stirring is in a range from 30% to 50%, and the mass ratio of the solvent used in the third stirring is in a range from 30% to 50%. The third stirring can coat the positive electrode active material and the conductive agent through the binder added again, thereby playing a role in maintaining stable dispersion of the materials in the slurry and slowing down the gelation of the slurry.

If too much or too little binder is added during the first stirring, the gelation phenomenon of the slurry cannot be effectively alleviated.

In some embodiments, vacuumizing is started during the third stirring. In the prior art, stirring is usually carried out under vacuum conditions throughout the entire process. The present application can reduce the loss of solvent by starting vacuumizing during the third stirring, and can also discharge the gas in the slurry, thereby further improving the uniformity of the slurry.

The preparation method for the positive electrode slurry in the prior art has poor compatibility and cannot adapt to a difference of weight average molecular weights of the binders in the slurry. Therefore, very high precision requirements are raised for the material. The present application reduces the discharge viscosity of the positive electrode slurry and alleviates the gelation phenomenon of the positive electrode slurry by stepwise slurry mixing, so that the slurry having a binder with a high weight average molecular weight still has low discharge viscosity and agglomeration resistance, thereby improving the universality of the preparation method. The preparation method of the present application is not only suitable for a binder with a low weight average molecular weight, but also suitable for a binder with a high weight average molecular weight, and can effectively alleviate the gelation phenomenon of different slurry, help to improve production efficiency and broaden a process window for slurry coating.

In some embodiments, the binder includes at least one polyvinylidene fluoride with a weight average molecular weight of 0.15 million to 1.5 million. In some embodiments, the weight average molecular weight of polyvinylidene fluoride is any one or more of 0.15 million, 0.2 million, 0.25 million, 0.3 million, 0.35 million, 0.4 million, 0.45 million, 0.5 million, 0.55 million, 0.6 million, 0.65 million, 0.7 million, 0.75 million, 0.8 million, 0.85 million, 0.9 million, 0.95 million, 1 million, 1.05 million, 1.1 million, 1.15 million, 1.2 million, 1.25 million, 1.3 million, 1.35 million, 1.4 million, 1.45 million or 1.5 million.

Herein, the term "weight average molecular weight" refers to an average molecular weight of a polymer in unit weight, according to a statistical average molecular weight of the polymer by mass.

The slurry mixing process in the prior art is difficult to apply to the binders with the high weight average molecular weight. The prepared slurry has high discharge viscosity and is difficult to meet coating demands. In addition, the slurry will exhibit severe gelation phenomenon. The preparation method disclosed in the present application is applicable to the binder with the weight average molecular weight of up to 1.5 million, so that the slurry including the binder with the high weight average molecular weight still has low discharge viscosity and gelation resistance and can meet use demands of a new generation binder.

In some embodiments, the binder at least includes two types of polyvinylidene fluoride, which have weight average molecular weights in a difference of no more than 1.5 million. In some embodiments, the binder includes two or more types of polyvinylidene fluoride with different weight average molecular weights, and a difference of the weight average molecular weights of the polyvinylidene fluoride is no more than 1.45 million, 1.4 million, 1.35 million, 1.3 million, 1.25 million, 1.2 million, 1.15 million, 1.1 million, 1.05 million, 1 million, 0.95 million, 0.9 million, 0.85 million, 0.8 million, 0.75 million, 0.7 million, 0.65 million, 0.6 million, 0.55 million, 0.5 million, 0.45 million, 0.4 million, 0.35 million, 0.3 million, 0.25 million, 0.2 million, 0.15 million, 0.1 million or 0.05 million.

The applicant unexpectedly discovered that the preparation method disclosed in the present application can be effectively adapted to positive electrode slurries including binders of various weight average molecular weights. Different from the prior art where binders with different molecular weights are prone to causing a phenomenon of aggravating gelation, the positive electrode slurry prepared by the method of the present application can effectively apply properties of the polyvinylidene fluoride binders with different molecular weights, and the gelation phenomenon of the slurry is further alleviated through mutual cooperation of large and small chain segments and an effect of steric hindrance.

In some embodiments, for the first stirring, a revolution velocity is in a range from 20 rpm to 40 rpm, and an autorotation velocity is in a range from 100 rpm to 800 rpm. In some embodiments, for the first stirring, the revolution velocity is any one of 20 rpm, 25 rpm, 30 rpm, 35 rpm or 40 rpm. In some embodiments, for the first stirring, the autorotation velocity is any one of 150 rpm, 200 rpm, 250 rpm, 300 rpm, 350 rpm, 400 rpm, 450 rpm, 500 rpm, 550 rpm, 600 rpm, 650 rpm, 700 rpm, 750 rpm or 800 rpm.

Herein, the term "autorotation velocity" refers to a velocity at which a stirrer rotates about its own axis.

Herein, the term "revolution velocity" refers to the speed at which the stirrer rotates around the kettle that is loaded with materials.

In some embodiments, the stirrer is a planetary stirrer. The working principle of the planetary stirrer is that after the stirrer is started, the planet carrier rotates, driving the stirring shaft in the box to rotate. It rotates at a high speed while revolving around the axis of the barrel, so that the material is subjected to strong shearing and kneading. It can be understood that the preparation method provided in the present application is suitable for any type of planetary stirrer.

If the revolution velocity of the first stirring is too low or too high or the autorotation velocity of the first stirring is too low, it will cause non-uniform dispersion of the binder, make the slurry's discharge viscosity too high and the slurry's viscosity increase rapidly during the standing process and cause the slurry to gelate.

If the autorotation velocity of the first stirring is too high, the glue solution will be too thin, affecting the anti-sedimentation effect of the binder, resulting in an increase of a difference of solid contents between the upper and lower layers after the slurry has been left to stand for 24 hours.

A velocity of the first stirring within a suitable range can make the slurry have good gelation resistance and good sedimentation resistance at the same time.

In some embodiments, a stirring duration of the first stirring is in a range from 20 minutes to 50 minutes. In some embodiments, a stirring duration of the first stirring is 25 minutes, 30 minutes, 35 minutes, 40 minutes, 45 minutes or 50 minutes.

If the duration of the first stirring is too short, the binder cannot be effectively dispersed in the solvent and the slurry is prone to gelation. If the duration of the first stirring is too long, the effect of the binder on the dispersion of materials such as the positive electrode active material will be reduced, which makes the slurry prone to sedimentation, leads to energy waste and reduce production efficiency.

A duration of the first stirring within a suitable range helps to further alleviate the gelation phenomenon of the slurry and improve the manufacturability of the slurry.

In some embodiments, an autorotation velocity of the second stirring is in a range from 800 rpm to 1500 rpm. In some embodiments, the autorotation velocity of the second stirring is optionally any one of 800 rpm, 850 rpm, 900 rpm, 950 rpm, 1000 rpm, 1050 rpm, 1100 rpm, 1150 rpm, 1200 rpm, 1250 rpm, 1300 rpm, 1350 rpm, 1400 rpm, 1450 rpm or 1500 rpm.

If the autorotation velocity of the second stirring is too low or too high, the positive electrode active material and the conductive agent cannot be effectively dispersed in the glue solution, making the discharge viscosity of the slurry too high to meet production demands.

The autorotation velocity of the second stirring within a suitable range helps to further alleviate the gelation phenomenon of the slurry and improve the manufacturability of the slurry.

In some embodiments, the revolution velocity of the second stirring is 5 rpm to 10 rpm greater than the revolution velocity of the first stirring. In some embodiments, the revolution velocity of the second stirring is 5 rpm, 6 rpm, 7 rpm, 8 rpm, 9 rpm or 10 rpm greater than the revolution velocity of the first stirring.

If the revolution velocity of the second stirring is too low, it is not conducive to the dispersion of the positive electrode active material and the conductive agent in the glue solution, and the slurry is prone to gelation. If the revolution velocity of the second stirring is too high, it will make the positive electrode active substance and the conductive agent prone to cracking, make the slurry prone to sedimentation and thus aggravate gelation.

The revolution velocity of the second stirring within a suitable range can make the slurry have good gelation resistance and sedimentation resistance at the same time.

In some embodiments, the stirring duration of the second stirring is in a range from 30 minutes to 80 minutes. In some embodiments, the stirring duration of the second stirring is any one of 35 minutes, 40 minutes, 45 minutes, 50 minutes, 55 minutes, 60 minutes, 65 minutes, 70 minutes, 75 minutes or 80 minutes.

If the stirring duration of the second stirring is too short, it is not conducive to the dispersion of the positive electrode active material and the conductive agent in the glue solution, and the slurry is prone to gelation. If the stirring duration of the second stirring is too long, it will make the positive electrode active substance and the conductive agent prone to cracking and make the slurry prone to sedimentation.

A duration of the second stirring within a suitable range can make the slurry have good gelation resistance and sedimentation resistance at the same time.

In some embodiments, a stirring duration of the third stirring is in a range from 100 minutes to 130 minutes. In some embodiments, the stirring duration of the third stirring is any one of 100 minutes, 105 minutes, 110 minutes, 115 minutes, 120 minutes, 125 minutes or 130 minutes.

If the stirring duration of the third stirring is too short, it is not conducive to the uniform dispersion of the slurry, and the slurry is prone to gelation. If the stirring duration of the third stirring is too long, it will make the positive electrode active substance and the conductive agent prone to cracking, make the slurry prone to sedimentation and thus aggravate gelation.

A duration of the third stirring within a suitable range can make the slurry have good gelation resistance and sedimentation resistance at the same time.

In some embodiments, viscosity of the positive electrode slurry with a solid content ranging from 60% to 75% is in a range from 10000 mPa·s to 30000 mPa·s. In some embodiments, the viscosity of the positive electrode slurry with the solid content ranging from 60% to 75% is any one of 11000 mPa·s, 11000 mPa·s, 12000 mPa·s, 13000 mPa·s, 14000 mPa·s, 15000 mPa·s, 16000 mPa·s, 17000 mPa·s, 18000 mPa·s, 19000 mPa·s, 20000 mPa·s, 21000 mPa·s, 22000 mPa·s, 23000 mPa·s, 24000 mPa·s, 25000 mPa·s, 26000 mPa·s, 27000 mPa·s, 28000 mPa·s, 29000 mPa·s or 30000 mPa·s.

The slurry formed by the preparation method of the present application has a high solid content, suitable viscosity and excellent processability, and can be directly used for the subsequent coating process, and thus the production efficiency can be improved.

In some embodiments, a ratio of a mass of the positive electrode active material to a total mass of the binder is in a range from 50:1 to 60:1, and a ratio of a mass of the conductive agent to the total mass of the binder is in a range from 0.3:1 to 0.5:1. In some embodiments, a ratio of a mass of the positive electrode active material to the total mass of the binder is 50:1, 51:1, 52:1, 53:1, 54:1, 55:1, 56:1, 57:1, 58:1, 59:1 or 60:1. In some embodiments, a ratio of a mass of the conductive agent to the total mass of the binder is 0.3:1, 0.35:1, 0.4:1, 0.45:1 or 0.5:1.

The total mass of the binder refers to a sum of the mass of the binder added in the first stirring and the mass of the binder added in the third stirring. It may be understood that the total amount of the added binder, positive electrode active material, conductive agent and solvent can be determined by those skilled in the art according to a rated range of a stirring device.

The positive electrode slurry within the above ranges not only has good processability, but also makes the formed positive electrode plate have excellent electrochemical performance.

In some embodiments, the solvent is one or more of N-methyl-2-pyrrolidone, N,N-dimethylpropionamide, N,N-diethylpropionamide, N,N-dipropylpropionamide, N,N-dibutylpropionamide, N,N-dimethylethylpropionamide and 3-butoxy-N-methylpropionamide.

The above solvent has good solubility for a variety of binders, and can effectively disperse various materials such as binders, positive electrode active materials and conductive agents, which helps to improve the coating quality of the slurry.

### [Positive electrode slurry]

The present application further provides positive electrode slurry, the positive electrode slurry has a solid content ranging from 60% to 75% and initial viscosity ranging from 10000 mPa·s to 30000 mPa·s, and viscosity of the positive electrode slurry is less than 50000 mPa·s after standing for 24 hours. In some embodiments, the viscosity of the positive electrode slurry with the solid content ranging from 60% to 75% is any one of 11000 mPa·s, 12000 mPa·s, 13000 mPa·s, 14000 mPa·s, 15000 mPa·s, 16000 mPa·s, 17000 mPa·s, 18000 mPa·s, 19000 mPa·s, 20000 mPa·s, 21000 mPa·s, 22000 mPa·s, 23000 mPa·s, 24000 mPa·s, 25000 mPa·s, 26000 mPa·s, 27000 mPa·s, 28000 mPa·s, 29000 mPa·s or 30000 mPa·s. In some embodiments, after standing for 24 hours, the viscosity of the positive electrode slurry is less than 50000 mPa·s, 45000 mPa·s, 40000 mPa·s, 35000 mPa·s, 30000 mPa·s, 25000 mPa·s, 20000 mPa·s or 15000 mPa·s.

The initial viscosity is the discharge viscosity of the positive electrode slurry when its preparation is completed.

The slurry of the present application has a high solid content, suitable viscosity and excellent processability and storability, and can be directly used for a subsequent coating process, and thus the production efficiency can be improved.

In some embodiments, the positive electrode slurry includes at least one polyvinylidene fluoride with a weight average molecular weight of 0.15 million to 1.5 million. In some embodiments, the weight average molecular weight of polyvinylidene fluoride is any one or more of 0.15 million, 0.2 million, 0.25 million, 0.3 million, 0.35 million, 0.4 million, 0.45 million, 0.5 million, 0.55 million, 0.6 million, 0.65 million, 0.7 million, 0.75 million, 0.8 million, 0.85 million, 0.9 million, 0.95 million, 1 million, 1.05 million, 1.1 million, 1.15 million, 1.2 million, 1.25 million, 1.3 million, 1.35 million, 1.4 million, 1.45 million or 1.5 million.

The positive electrode slurry of the present application is suitable for binders with different weight average molecular weights, and can effectively alleviate a gelation phenomenon for binders with different weight average molecular weights, thereby helping to improve production efficiency and broaden a process window for slurry coating.

In some embodiments, the binder at least includes two types of polyvinylidene fluoride, which have weight average molecular weights in a difference of no more than 1.5 million. In some embodiments, the binder includes two or more types of polyvinylidene fluoride with different weight average molecular weights, and a difference of the weight average molecular weights of the polyvinylidene fluoride is no more than 1.45 million, 1.4 million, 1.35 million, 1.3 million, 1.25 million, 1.2 million, 1.15 million, 1.1 million, 1.05 million, 1 million, 0.95 million, 0.9 million, 0.85 million, 0.8 million, 0.75 million, 0.7 million, 0.65 million, 0.6 million, 0.55 million, 0.5 million, 0.45 million, 0.4 million, 0.35 million, 0.3 million, 0.25 million, 0.2 million, 0.15 million, 0.1 million or 0.05 million.

The gelation phenomenon of the slurry can be further alleviated by including binders with different weight average molecular weights in the slurry.

In some embodiments, the positive electrode slurry is prepared through the preparation method in the first aspect of the present application. The slurry formed by the preparation method of the present application has a high solid content, suitable viscosity and excellent processability, and can be directly used for the subsequent coating process, and thus the production efficiency can be improved.

In addition, a secondary battery, a battery module, a battery pack, and an electrical apparatus in the present application are described below with reference to the drawings as appropriate.

In an embodiment of the present application, a secondary battery is provided.

In general, the secondary battery comprises a positive electrode plate, a negative electrode plate, an electrolyte, and a separator. During charging and discharging of the battery, active ions are intercalated and deintercalated back and forth between the positive electrode plate and the negative electrode plate. The electrolyte serves to conduct ions between the positive electrode plate and the negative electrode plate. The separator is arranged between the positive electrode plate and the negative electrode plate and mainly functions to prevent the positive and negative electrodes from short-circuiting while enabling ions to pass through.

### [Positive electrode plate]

The positive electrode plate includes a positive electrode current collector and a positive electrode film layer arranged on at least one surface of the positive electrode current collector, and the positive electrode plate is prepared from the positive electrode slurry prepared by the preparation method for the positive electrode slurry of any of embodiments.

As an example, the positive electrode current collector has two surfaces opposite to each other in its own thickness direction, and the positive electrode film layer is arranged on either one or both of the two opposite surfaces of the positive electrode current collector.

In some embodiments, the positive electrode current collector can be a metal foil or a composite current collector. For example, an aluminum foil can be used as the metal foil. The composite current collector may comprise a polymer material substrate layer and a metal layer formed on at least one surface of the polymer material substrate layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene (PP), polyethylene terephthalate (PET), polybutylene terephthalate (PBT), polystyrene (PS), or polyethylene (PE)).

In some embodiments, the positive electrode active material may be a positive electrode active material for batteries well known in the art. As an example, the positive electrode active material may include at least one of the following materials: a lithium-comprising phosphate of olivine structure, a lithium transition metal oxide, and a respective modified compound thereof. However, the present application is not limited to these materials, and other conventional materials useful as positive electrode active materials for batteries can also be used. These positive electrode active materials may be used alone or in combination of two or more thereof. Among them, examples of lithium transition metal oxides may include, but are not limited to, at least one of a lithium-cobalt oxide (such as LiCoO₂), a lithium-nickel oxide (such as LiNiO₂), a lithium-manganese oxide (such as LiMnO₂ or LiMn₂O₄), a lithium-nickel-cobalt oxide, a lithium-manganese-cobalt oxide, a lithium-nickel-manganese oxide, a lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), a lithium-nickel-cobalt-aluminum oxide (such as LiNi_{0.85}Co_{0.15}Al_{0.05}O₂), and a modified compound thereof. Examples of lithium-containing phosphates of olivine structure may include, but are not limited to, at least one of lithium iron phosphate (e.g., LiFePO₄ (also abbreviated as LFP)), lithium iron phosphate and carbon composites, lithium manganese phosphate (e.g., LiMnPO₄), lithium manganese phosphate and carbon composites, lithium iron manganese phosphate, and lithium iron manganese phosphate and carbon composites.

In some embodiments, the positive electrode film layer further optionally comprises a binder. As an example, the binder may comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin.

In some embodiments, the positive electrode film layer further optionally comprises a conductive agent. As an example, the conductive agent may include at least one of superconducting carbon, acetylene black, carbon black, Ketjen black, carbon dot, carbon nanotube, graphene, and carbon nanofiber.

In some embodiments, the positive electrode plate may be prepared by the following manner: preparing the positive electrode slurry with the above components for preparing the positive electrode plate, such as the positive electrode active material, the conductive agent, the binder, and the solvent (such as N-methyl-2-pyrrolidone) using the preparation method for the positive electrode slurry in any of embodiments of the present application; and coating the positive electrode current collector with the prepared positive electrode slurry, and carrying out oven drying, cold pressing and other processes to obtain the positive electrode plate.

### [Negative electrode plate]

The negative electrode plate comprises a negative electrode current collector and a negative electrode film layer arranged on at least one surface of the negative electrode current collector, and the negative electrode film layer comprises a negative electrode active material.

As an example, the negative electrode current collector has two surfaces opposite in its own thickness direction, and the negative electrode film layer is arranged on either one or both of the two opposite surfaces of the negative electrode current collector.

In some embodiments, the negative electrode current collector may be a metal foil or a composite current collector. For example, a copper foil can be used as the metal foil. The composite current collector may include a high molecular material substrate layer and a metal layer formed on at least one surface of the high molecular material substrate. The composite current collector can be formed by forming a metal material (copper, copper alloy, nickel, nickel alloy, titanium, titanium alloy, silver, and silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, a negative electrode active material for the battery well known in the art may be used as the negative electrode active material. As an example, the negative active material may include at least one of the following materials: artificial graphite, natural graphite, soft carbon, hard carbon, silicon-based material, tin-based material, and lithium titanate, etc. The silicon-based material may be selected from at least one of elemental silicon, silicon-oxygen complex, silicon-carbon complex, silicon-nitrogen complex, and silicon alloy. The tin-based material may be selected from at least one of elemental tin, a tin-oxygen compound, and a tin alloy. However, the present application is not limited to these materials, and other conventional materials useful as negative electrode active materials for batteries can also be used. These negative electrode active materials may be used alone or in a combination of two or more thereof.

In some embodiments, the negative electrode film layer further optionally comprises a binder. The binder may be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally comprises a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer further optionally comprises other adjuvants, for example, a thickener (such as sodium carboxymethyl cellulose (CMC-Na)).

In some embodiments, the negative electrode plate can be prepared by dispersing the components for preparing the negative electrode plate, for example, the negative electrode active material, the conductive agent, the binder and any other components in a solvent (for example, deionized water) to form a negative electrode slurry; and coating the negative electrode slurry on a negative electrode current collector, followed by oven drying, cold pressing and other procedures, to obtain the negative electrode plate.

### [Electrolyte]

The electrolyte serves to conduct ions between the positive electrode plate and the negative electrode plate. The type of the electrolyte is not particularly limited in the present application, and can be selected according to requirements. For example, the electrolyte may be in a liquid, gel, or full solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution further optionally comprises an additive. For example, the additive may include a negative electrode film-forming additive or a positive electrode film-forming additive, or may further include an additive that can improve some performance of the battery, such as an additive that improves overcharge performance of the battery or an additive that improves high-temperature or low-temperature performance of the battery.

### [Separator]

In some embodiments, the secondary battery further comprises a separator. The type of the separator is not particularly limited in the present application, and any well-known separator having good chemical stability, mechanical stability, and a porous structure may be selected.

In some embodiments, the material of the separator can be selected from at least one of glass fiber, non-woven cloth, polyethylene, polypropylene, and polyvinylidene fluoride. The separator may be a single-layer film or a multi-layer composite film, and is not particularly limited. When the separator is a multilayer composite film, the material in each layer may be same or different, which is not particularly limited.

In some embodiments, the positive electrode plate, the negative electrode plate, and the separator may be made into an electrode assembly by a winding process or a stacking process.

In some embodiments, the secondary battery may comprise an outer package. The outer package can be used to encapsulate the above electrode assembly and the above electrolyte.

In some embodiments, the outer package of the secondary battery may be a hard case, such as a hard plastic case, an aluminum case, a steel case, and the like. The outer package of the secondary battery may also be a soft pack, such as a bag-type soft pack. The material of the soft bag may be a plastic, and examples of the plastic may include polypropylene, polybutylene terephthalate, polybutylene succinate, and the like.

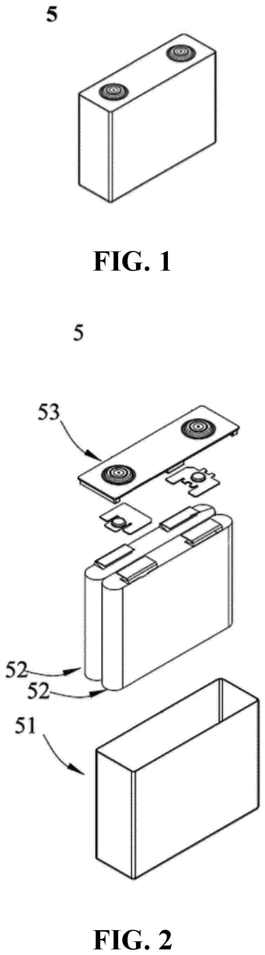

The shape of the secondary battery is not particularly limited in the present application, and may be a cylinder, a square, or any other shape. For example, Fig. 1 shows a secondary battery 5 with a square structure as an example.

In some embodiments, referring to Fig. 2, the outer package may comprise a case 51 and a cover plate 53. The case 51 may comprise a bottom plate and a side plate connected to the bottom plate, which enclose to form an accommodating cavity. The case 51 has an opening that communicates with the accommodating cavity, and the cover plate 53 may cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 comprised in the secondary battery 5 may be one or more, and may be selected by those skilled in the art according to specific actual requirements.

In some embodiments, the secondary batteries may be assembled into a battery module, the number of secondary batteries comprised in the battery module may be one or more, and the specific number may be selected by those skilled in the art according to the application and capacity of the battery module.

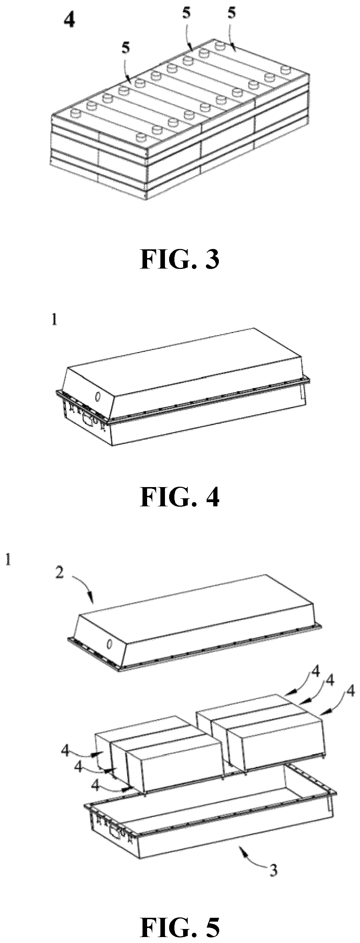

Fig. 3 shows a battery module 4 as an example. Referring to Fig. 3, in the battery module 4, a plurality of secondary batteries 5 can be sequentially arranged along the length direction of the battery module 4. Of course, any other arrangements are also possible. The plurality of secondary batteries 5 may further be fixed by fasteners.

Optionally, the battery module 4 may further include a shell having an accommodating space, in which the plurality of secondary batteries 5 is accommodated.

In some embodiments, the above battery modules may be further assembled into a battery pack, the number of battery modules comprised in the battery pack may be one or more, and the specific number may be selected by those skilled in the art based on the application and capacity of the battery pack.

Figs. 4 and 5 show a battery pack 1 as an example. Referring to Figs. 4 and 5, the battery pack 1 may comprise a battery box and a plurality of battery modules 4 provided in the battery box. The battery box comprises an upper box 2 and a lower box 3, where the upper box 2 can cover the lower box 3 and forms an enclosed space for accommodating the battery module 4. The plurality of battery modules 4 may be arranged in the battery box in any manner.

In addition, the present application further provides an electrical apparatus, comprising at least one of the secondary battery, the battery module, or the battery pack provided in the present application. The secondary battery, the battery module, or the battery pack can be used as a power source for the electrical apparatus, and can also be used as an energy storage unit for the electrical apparatus. The electrical apparatus may include, but is not limited to, a mobile device (such as a mobile phone, and a laptop, etc.), an electric vehicle (such as an all-electric vehicle, a hybrid electric vehicle, a plug-in hybrid electric vehicle, an electric bicycle, an electric scooter, an electric golf cart, and an electric truck, etc.), an electric train, a ship, a satellite, an energy storage system, etc.

For the electrical apparatus, the secondary battery, the battery module, or the battery pack may be selected according to its use requirements.

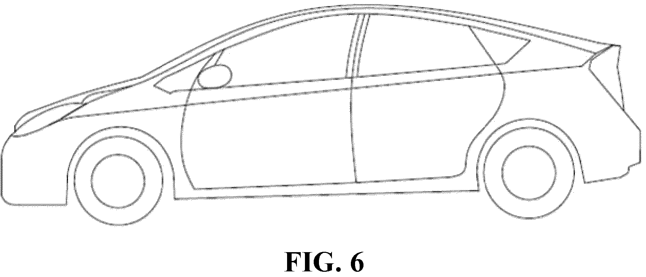

Fig. 6 is an example of an electrical apparatus. The electrical apparatus is an all-electric vehicle, a hybrid electric vehicle, a plug-in hybrid electric vehicle, or the like. In order to meet the requirements of the electrical apparatus for high power and high energy density of a secondary battery, a battery pack or a battery module may be used.

As another example, the apparatus may be a mobile phone, a tablet, a laptop, etc. The apparatus is generally required to be light and thin, and may use a secondary battery as a power source.

### EXAMPLES

Embodiments of the present application will be described below. The embodiments described below are exemplary and only used to explain the present application, and are not to be construed as limiting the present application. Where specific techniques or conditions are not specified in the examples, the techniques or conditions described in the literature of the art or the product specifications are followed. Where manufacturers are not specified, the reagents or instruments used are conventional products and are commercially available.

### I. Preparation method

### Example 1

Preparation of positive electrode slurry:
1) 15 kg of polyvinylidene fluoride binder with a weight average molecular weight of 0.15 million and 375 kg of N-methyl-2-pyrrolidone solvent are mixed in a double planetary stirrer for first stirring to prepare a glue solution, wherein a revolution velocity of the first stirring is 25 rpm, an autorotation velocity of the first stirring is 500 rpm, a stirring duration of the first stirring is 40 minutes, and a temperature of slurry is controlled to be 50°C all the time during a slurry preparation process;
2) 1200 kg of positive electrode active material lithium iron phosphate and 9 kg of conductive carbon black (SP) are mixed with the glue solution for second stirring to prepare a mixture, an autorotation velocity of the second stirring is 1300 rpm, a revolution velocity of the second stirring is 30 rpm, and a stirring duration of the second stirring is 60 minutes;
3) 7.5 kg of a polyvinylidene fluoride binder with a weight average molecular weight of 0.15 million and 187.5 kg of an N-methyl-2-pyrrolidone solvent are mixed with the mixture for third stirring to prepare slurry having a solid content of 68%, wherein a deviation value of the solid content is between plus 5% and minus 5%, and a stirring device is vacuumized during the third stirring process, wherein a vacuum degree is less than -20 MPa, a stirring duration is 120 minutes, a revolution velocity is 30 rpm, an autorotation velocity is 1300 rpm, and slurry viscosity is in a range from 12000 mPa·s to 18000 mPa·s; and
4) cooling water is fed to cool down to 25°C, and stirring is completed and then discharging is performed.

### Examples 2 to 5

They are basically the same as the preparation method of Example 1, except that a weight average molecular weight of the added binder is adjusted. See Table 1 and Table 2 for specific parameters.

### Examples 6 to 12

They are basically the same as the preparation method of Example 1, except that binders with various different weight average molecular weights are added. See Table 1 and Table 2 for specific parameters. In Examples 6 to 11, a mass ratio of first polyvinylidene fluoride to second polyvinylidene fluoride is 2:1. In Example 12, a mass ratio of the first polyvinylidene fluoride to the second polyvinylidene fluoride to third polyvinylidene fluoride is 3:2:1.

### Examples 13 to 16

They are basically the same as the preparation method of Example 3, except that a total mass of the added N-methyl-2-pyrrolidone solvent is adjusted, so that a solid content of positive electrode slurry differs. See Table 1 and Table 2 for specific parameters.

### Examples 17 to 46

They are basically the same as the preparation method of Example 3, except that stirring parameters are adjusted. See Table 1 and Table 2 for specific parameters.

### Comparative example 1

1) 22.5 kg of polyvinylidene fluoride binder with a weight average molecular weight of 0.15 million and 562.5 kg of N-methyl-2-pyrrolidone solvent are added into a double planetary stirring device, wherein a mass ratio of the binder to the solvent is 0.04: 1, a stirring duration is 40 minutes, a revolution velocity is 25 rpm, and an autorotation velocity is 400 rpm;
2) the revolution velocity and autorotation velocity of the stirring device are increased, the stirring duration is 60 minutes, the revolution velocity is 30 rpm, and the autorotation velocity is 1300 rpm;
3) 1200 kg of a positive electrode active material, namely, lithium iron phosphate, is added, the stirring duration is 60 minutes, the revolution velocity is 30 rpm, and the autorotation velocity is 1300 rpm;
4) 9 kg of conductive carbon black (SP) is added, and a stirring device is vacuumized, wherein a vacuum degree is less than -50 Mpa, a stirring duration is 120 minutes, a revolution velocity is 30 rpm, an autorotation velocity is 1300 rpm, and then slurry with a solid content of 68% is obtained; and
5) cooling water is fed to cool down to 25°C, and stirring is completed and then discharging is performed.

### Comparative examples 2 to 4

They are basically the same as Comparative example 1, except that weight average molecular weights of the polyvinylidene fluoride are respectively adjusted to 0.5 million, 0.8 million and 1 million. See Table 1 and Table 2 for specific parameters.

### Comparative example 5

It is basically the same as Comparative example 1, except that a binder is adjusted to include two types of polyvinylidene fluoride with weight average molecular weights, the weight average molecular weight of the first polyvinylidene fluoride is 0.8 million, the weight average molecular weight of the second polyvinylidene fluoride is 1.4 million, the two types of polyvinylidene fluoride with the weight average molecular weights are mixed for use, a mass ratio of the first polyvinylidene fluoride to the second polyvinylidene fluoride is 2: 1, and see Table 1 and Table 2 for specific parameters.

### Comparative examples 6 to 7

They are basically the same as the preparation method of Example 3, except that a mass of a binder added in the first stirring and the third stirring is adjusted. See Table 1 and Table 2 for specific parameters.

### II. Test for slurry property

### 1. Test for slurry viscosity

The prepared positive electrode slurry is placed for 10 minutes before discharging, a viscosity value measured by a Dveslvtjo rotational viscosity tester (BROOKFIELD) is recorded as discharge viscosity, wherein test conditions are: 25°C, a rotation velocity is 12 rpm, when the slurry viscosity is no less than 2000mPa·s, a 64 rotor is used, and when the slurry viscosity is less than 2000mPa·s, a 62 rotor is used. Parallel determination is performed three times and an average value is obtained.

### 2. Test for slurry viscosity after standing for 24 hours

The prepared positive electrode slurry is placed for 24 hours, a viscosity value measured by a Dveslvtjo rotational viscosity tester (BROOKFIELD) is recorded as 24-hour viscosity, wherein test conditions are: 25°C, a rotation velocity is 12 rpm, when the slurry viscosity is no less than 2000mPa·s, a 64 rotor is used, and when the slurry viscosity is less than 2000mPa·s, a 62 rotor is used. Parallel determination is performed three times and an average value is obtained.

### 3. Test for variation of slurry viscosity

A variation value of the slurry viscosity is subtracting the discharge viscosity of the slurry from the 24-hour viscosity of the slurry.

### 4. Test for a gel state after making the slurry stand for 24 hours

After making the slurry stand for 24 hours, a steel ruler is used to pick up the slurry in a beaker, and whether the slurry is in a gelation-free state, a mild gelation state, a medium gelation state or a severe gelation state is judged according to a flow state of the slurry.

The gelation-free state: the slurry flows naturally and continuously, and the slurry flows evenly on a surface of the steel ruler without lumps.

The mild gelation state: the slurry flows naturally and continuously, but a fluid is thin, and the slurry is spread basically evenly on the surface of the steel ruler with mild lumps.

The medium gelation state: the slurry flows dropwise naturally and intermittently, the flow is not continuous, and the slurry cannot be spread evenly on the surface of the steel ruler with obvious lump-like agglomeration.

The severe gelation state: the slurry cannot flow down in a stream, forms into lumps and falls off, or remains directly on the steel ruler and cannot flow down.

5. Difference of solid contents of an upper layer and a lower layer after making the slurry stand for 24 hours
a) An aluminum foil is weighed in a moisture meter, recorded as M₀, for resetting it to zero, wherein a model of the moisture meter is MOC-120H;
b) after making the slurry stand for 24 hours, upper-layer slurry is taken and a small amount thereof is coated on the aluminum foil, and then it is put into the moisture meter and weighed, which is recorded as M₁;
c) a device is closed and drying started;
d) after completion, the weighing data is recorded as M₂, and a solid content is calculated as (M₂-M₀)/(M₁-M₀); and
a solid content of lower-layer slurry is measured in the same way, and the solid content of the upper-layer slurry is substrated from the solid content of the lower-layer slurry to obtain the difference of the solid contents of the upper layer and the lower layer after making the slurry stand for 24 hours.

**Table 1 Preparation parameters and performance test in examples and comparative examples**

| Example | polyvinylidene fluoride binder | | | | First stirring | | | | Second stirring | | | Third stirring |
|---|---|---|---|---|---|---|---|---|---|---|---|---|
| | First weight averag e molecu lar weight/ 10,000 | Second weight averag e molecu lar weight/ 10,000 | Third weig ht avera ge mole cular weig ht/10, 000 | Maximum difference of weight average molecular weight/10, 000 | Prop ortio n of bind er | Time/ min | Revolu tion velocit y/rpm | Autorot ation velocit y/rpm | Tim e/mi n | Revolutio n velocity/rp m | Autorot ation velocit y/rpm | Time/ min |
| Example 1 | 15 | / | / | / | 2/3 | 40 | 25 | 500 | 60 | 30 | 1300 | 120 |
| Example 2 | *50* | / | / | / | 2/3 | 40 | 25 | 500 | 60 | 30 | 1300 | 120 |
| Example 3 | 80 | / | / | / | 2/3 | 40 | 25 | 500 | 60 | 30 | 1300 | 120 |
| Example 4 | 100 | / | / | / | 2/3 | 40 | 25 | 500 | 60 | 30 | 1300 | 120 |
| Example *5* | 150 | / | / | / | 2/3 | 40 | 25 | 500 | 60 | 30 | 1300 | 120 |
| Example 6 | 80 | 120 | / | 40 | 2/3 | 40 | 25 | 500 | 60 | 30 | 1300 | 120 |
| Example 7 | 80 | 140 | / | 60 | 2/3 | 40 | 25 | 500 | 60 | 30 | 1300 | 120 |
| Example 8 | 80 | 100 | / | 20 | 2/3 | 40 | 25 | 500 | 60 | 30 | 1300 | 120 |
| Example 9 | 80 | 150 | / | 70 | 2/3 | 40 | 25 | 500 | 60 | 30 | 1300 | 120 |
| Example 10 | 15 | 150 | / | 135 | 2/3 | 40 | *25* | 500 | 60 | 30 | 1300 | 120 |
| Example 11 | 15 | 80 | / | 65 | 2/3 | 40 | 25 | 500 | 60 | 30 | 1300 | 120 |
| Example 12 | 15 | 80 | 150 | 135 | 2/3 | 40 | 25 | 500 | 60 | 30 | 1300 | 120 |
| Example 13 | 80 | / | / | / | 2/3 | 40 | 25 | 500 | 60 | 30 | 1300 | 120 |
| Example 14 | 80 | / | / | / | 2/3 | 40 | 25 | 500 | 60 | 30 | 1300 | 120 |
| Example 15 | 80 | / | / | / | 2/3 | 40 | 25 | 500 | 60 | 30 | 1300 | 120 |
| Example 16 | 80 | / | / | / | 2/3 | 40 | 25 | 500 | 60 | 30 | 1300 | 120 |
| Example 17 | 80 | / | / | / | 1/2 | 40 | 25 | 500 | 60 | 30 | 1300 | 120 |
| Example 18 | 80 | / | / | / | 7/10 | 40 | 25 | 500 | 60 | 30 | 1300 | 120 |
| Example 19 | 80 | / | / | / | 2/3 | 40 | 10 | 500 | 60 | 30 | 1300 | 120 |
| Example 20 | 80 | / | / | / | 2/3 | 40 | *50* | 500 | 60 | 30 | 1300 | 120 |
| Example 21 | 80 | / | / | / | 2/3 | 40 | 20 | 500 | 60 | 30 | 1300 | 120 |
| Example 22 | 80 | / | / | / | 2/3 | 40 | 40 | 500 | 60 | 30 | 1300 | 120 |
| Example 23 | 80 | / | / | / | 2/3 | 40 | 25 | 100 | 60 | 30 | 1300 | 120 |
| Example 24 | 80 | / | / | / | 2/3 | 40 | 25 | 800 | 60 | 30 | 1300 | 120 |
| Example 25 | 80 | / | / | / | 2/3 | 40 | 25 | 50 | 60 | 30 | 1300 | 120 |
| Example 26 | 80 | / | / | / | 2/3 | 40 | 25 | 1000 | 60 | 30 | 1300 | 120 |
| Example 27 | 80 | / | / | / | 2/3 | 10 | 25 | 500 | 60 | 30 | 1300 | 120 |
| Example 28 | 80 | / | / | / | 2/3 | 20 | 25 | 500 | 60 | 30 | 1300 | 120 |
| Example 29 | 80 | / | / | / | 2/3 | *50* | 25 | 500 | 60 | 30 | 1300 | 120 |
| Example 30 | 80 | / | / | / | 2/3 | 60 | 25 | 500 | 60 | 30 | 1300 | 120 |
| Example 31 | 80 | / | / | / | 2/3 | 40 | 25 | 500 | 60 | 30 | 800 | 120 |
| Example 32 | 80 | / | / | / | 2/3 | 40 | 25 | 500 | 60 | 30 | 1500 | 120 |
| Example 33 | 80 | / | / | / | 2/3 | 40 | 25 | 500 | 60 | 30 | 600 | 120 |
| Example 34 | 80 | / | / | / | 2/3 | 40 | 25 | 500 | 60 | 30 | 1700 | 120 |
| Example 35 | 80 | / | / | / | 2/3 | 40 | 25 | 500 | 60 | 25 | 1300 | 120 |
| Example 36 | 80 | / | / | / | 2/3 | 40 | 25 | 500 | 60 | 32 | 1300 | 120 |
| Example 37 | 80 | / | / | / | 2/3 | 40 | 25 | 500 | 60 | 35 | 1300 | 120 |
| Example 38 | 80 | / | / | / | 2/3 | 40 | 25 | 500 | 60 | 40 | 1300 | 120 |
| Example 39 | 80 | / | / | / | 2/3 | 40 | 25 | 500 | 10 | 30 | 1300 | 120 |
| Example 40 | 80 | / | / | / | 2/3 | 40 | 25 | 500 | 30 | 30 | 1300 | 120 |
| Example 41 | 80 | / | / | / | 2/3 | 40 | 25 | 500 | 80 | 30 | 1300 | 120 |
| Example 42 | 80 | / | / | / | 2/3 | 40 | 25 | 500 | 100 | 30 | 1300 | 120 |
| Example 43 | 80 | / | / | / | 2/3 | 40 | 25 | 500 | 60 | 30 | 1300 | 80 |
| Example 44 | 80 | / | / | / | 2/3 | 40 | 25 | 500 | 60 | 30 | 1300 | 100 |
| Example 45 | 80 | / | / | / | 2/3 | 40 | 25 | 500 | 60 | 30 | 1300 | 130 |
| Example 46 | 80 | / | / | / | 2/3 | 40 | 25 | 500 | 60 | 30 | 1300 | 150 |
| Compara tive example 1 | 15 | | / | / | 100 % | 40 | 25 | 500 | 60 | 30 | 1300 | 120 |
| Compara tive example 2 | *50* | | / | / | 100 % | 40 | 25 | 500 | 60 | 30 | 1300 | 120 |
| Compara tive example 3 | 80 | | / | / | 100 % | 40 | 25 | 500 | 60 | 30 | 1300 | 120 |
| Compara tive example 4 | 100 | | / | / | 100 % | 40 | 25 | 500 | 60 | 30 | 1300 | 120 |
| Compara tive example *5* | 80 | 140 | / | 60 | 100 % | 40 | 25 | 500 | 60 | 30 | 1300 | 120 |
| Compara tive example 6 | 80 | / | / | / | 1/3 | 40 | 25 | 500 | 60 | 30 | 1300 | 120 |
| Compara tive example 7 | 80 | / | / | / | 4/5 | 40 | 25 | 500 | 60 | 30 | 1300 | 120 |

**Table 2 Preparation parameters and performance test in examples and comparative examples**

| Exam ple | polyvinylidene fluoride binder | | | | Slurry | | | | | | | |
|---|---|---|---|---|---|---|---|---|---|---|---|---|
| | First weig ht avera ge mole cular weig ht/10, 000 | Seco nd weig ht avera ge mole cular weig ht/10, 000 | Third weig ht avera ge mole cular weig ht/10, 000 | Maxim um differe nce of weight average molecu lar weight/ 10,000 | Solid conte nt | Disch arge viscos ity × 10³/m Pa·s | Viscosity after standing for 24 hours × 10³/mPa·s | Change in viscosit y × 10³/mP a·s | Gelation state after standing for 24 hours | Solid content in lower layer after standin g for 24 hours/ % | Solid content in upper layer after standing for 24 hours/% | Differenc e of solid content in upper/low er layer after standing for 24 hours/% |
| Exam ple 1 | 15 | / | / | / | 68% | 15 | 29 | 14 | Gelation-free | 68.05 | 67.79 | 0.26 |
| Exam ple 2 | 50 | / | / | / | 68% | 13 | 29 | 16 | Gelation-free | 68.11 | 67.91 | 0.20 |
| Exam ple 3 | 80 | / | / | / | 68% | 14 | 33 | 19 | Slight gelation | 68.11 | 67.91 | 0.20 |
| Exam ple 4 | 100 | / | / | / | 68% | 16 | 37 | 21 | Slight gelation | 68.11 | 67.90 | 0.21 |
| Exam ple 5 | 150 | / | / | / | 68% | 17 | 41 | 24 | Slight gelation | 68.08 | 67.93 | 0.15 |
| Exam ple 6 | 80 | 120 | / | 40 | 68% | 13 | 31 | 18 | Slight gelation | 68.16 | 67.83 | 0.33 |
| Exam ple 7 | 80 | 140 | / | 60 | 68% | 16 | 35 | 19 | Slight gelation | 68.15 | 67.87 | 0.28 |
| Exam ple 8 | 80 | 100 | / | 20 | 68% | 15 | 29 | 14 | Gelation-free | 68.18 | 67.79 | 0.39 |
| Exam ple 9 | 80 | 150 | / | 70 | 68% | 17 | 37 | 20 | Slight gelation | 68.09 | 67.92 | 0.17 |
| Exam ple 10 | 15 | 150 | / | 135 | 68% | 14 | 25 | 11 | Gelation-free | 68.12 | 67.91 | 0.21 |
| Exam ple 11 | 15 | 80 | / | 65 | 68% | 8 | 17 | 9 | Gelation-free | 68.23 | 67.86 | 0.37 |
| Exam ple 12 | 15 | 80 | 150 | 135 | 68% | 17 | 28 | 11 | Slight gelation | 68.11 | 67.86 | 0.25 |
| Exam ple 13 | 80 | / | / | / | 65% | 13 | 28 | 15 | Gelation-free | 65.49 | 64.78 | 0.71 |
| Exam ple 14 | 80 | / | / | / | 70% | 19 | 34 | 15 | Slight gelation | 70.12 | 69.91 | 0.21 |
| Exam ple 15 | 80 | / | / | / | 60% | *5* | 16.7 | 11.7 | Gelation-free | 61.15 | 59.27 | 1.88 |
| Exam ple 16 | 80 | / | / | / | 75% | 25 | 47 | 22 | Moderate gelation | 75.07 | 74.92 | 0.15 |
| Exam ple 17 | 80 | / | / | / | 68% | 16 | 27 | 11 | Slight gelation | 68.15 | 67.89 | 0.26 |
| Exam ple 18 | 80 | / | / | / | 68% | 20 | 39 | 19 | Slight gelation | 68.23 | 67.81 | 0.42 |
| Exam ple 19 | 80 | / | / | / | 68% | 23 | 46 | 23 | Severe gelation | 68.03 | 67.96 | 0.07 |
| Exam ple 20 | 80 | / | / | / | 68% | / | / | / | / | / | / | / |
| Exam ple 21 | 80 | / | / | / | 68% | 17 | 43 | 26 | Moderate gelation | 68.1 | 67.92 | 0.18 |
| Exam ple 22 | 80 | / | / | / | 68% | 17 | 31 | 14 | Slight gelation | 68.25 | 67.86 | 0.39 |
| Exam ple 23 | 80 | / | / | / | 68% | 23 | 36 | 13 | Slight gelation | 68.15 | 67.84 | 0.31 |
| Exam ple 24 | 80 | / | / | / | 68% | 15 | 28 | 13 | Slight gelation | 68.37 | 67.81 | 0.56 |
| Exam ple 25 | 80 | / | / | / | 68% | / | / | / | / | / | / | / |
| Exam ple 26 | 80 | / | / | / | 68% | 14 | 23 | 9 | Slight gelation | 68.41 | 67.61 | 0.80 |
| Exam ple 27 | 80 | / | / | / | 68% | 19 | 31 | 12 | Moderate gelation | 68.04 | 67.97 | 0.07 |
| Exam ple 28 | 80 | / | / | / | 68% | 17 | 28 | 11 | Slight gelation | 68.09 | 67.88 | 0.21 |
| Exam ple 29 | 80 | / | / | / | 68% | 13 | 26 | 13 | Gelation-free | 68.22 | 67.81 | 0.41 |
| Exam ple 30 | 80 | / | / | / | 68% | 8 | 18 | 10 | Gelation-free | 68.34 | 67.79 | 0.55 |
| Exam ple 31 | 80 | / | / | / | 68% | 25 | 36 | 11 | Moderate gelation | 68.03 | 67.98 | 0.05 |
| Exam ple 32 | 80 | / | / | / | 68% | 14 | 27 | 13 | Slight gelation | 68.41 | 67.39 | 1.02 |
| Exam ple 33 | 80 | / | / | / | 68% | / | / | / | / | / | / | / |
| Exam ple 34 | 80 | / | / | / | 68% | / | / | / | / | / | / | / |
| Exam ple 35 | 80 | / | / | / | 68% | 20 | 38 | 18 | Moderate gelation | 68.08 | 67.93 | 0.15 |
| Exam ple 36 | 80 | / | / | / | 68% | 17 | 35 | 18 | Slight gelation | 68.11 | 67.91 | 0.2 |
| Exam ple 37 | 80 | / | / | / | 68% | 13 | 28 | 15 | Gelation-free | 68.14 | 67.87 | 0.27 |
| Exam ple 38 | 80 | / | / | / | 68% | 9 | 26 | 17 | Gelation-free | 68.24 | 67.79 | 0.45 |
| Exam ple 39 | 80 | / | / | / | 68% | / | / | / | / | / | / | / |
| Exam ple 40 | 80 | / | / | / | 68% | 19 | 27 | 8 | Moderate gelation | 68.1 | 67.87 | 0.23 |
| Exam ple 41 | 80 | / | / | / | 2/3 | 40 | 25 | *500* | 80 | 30 | 1300 | 120 |
| Exam ple 42 | 80 | / | / | / | 2/3 | 40 | 25 | *500* | 100 | 30 | 1300 | 120 |
| Exam ple 43 | 80 | / | / | / | 2/3 | 40 | 25 | *500* | 60 | 30 | 1300 | 80 |
| Exam ple 44 | 80 | / | / | / | 2/3 | 40 | 25 | *500* | 60 | 30 | 1300 | 100 |
| Exam ple 45 | 80 | / | / | / | 2/3 | 40 | 25 | *500* | 60 | 30 | 1300 | 130 |
| Exam ple 46 | 80 | / | / | / | 2/3 | 40 | 25 | *500* | 60 | 30 | 1300 | 150 |
| Com parati ve exam ple 1 | 15 | / | / | / | 100 % | 40 | 25 | *500* | 60 | 30 | 1300 | 120 |
| Com parati ve exam ple 2 | *50* | / | / | / | 100 % | 40 | 25 | *500* | 60 | 30 | 1300 | 120 |
| Com parati ve exam ple 3 | 80 | / | / | / | 100 % | 40 | 25 | *500* | 60 | 30 | 1300 | 120 |
| Com parati ve exam ple 4 | 100 | / | / | / | 100 % | 40 | 25 | *500* | 60 | 30 | 1300 | 120 |
| Com parati ve exam ple 5 | 80 | 140 | / | 60 | 100 % | 40 | 25 | 500 | 60 | 30 | 1300 | 120 |
| Com parati ve exam ple 6 | 80 | / | / | / | 1/3 | 40 | 25 | 500 | 60 | 30 | 1300 | 120 |
| Com parati ve | 80 | / | / | / | 4/5 | 40 | 25 | 500 | 60 | 30 | 1300 | 120 |
| exam ple 7 | | | | | | | | | | | | |

### III. Analysis on test results of various examples and various comparative examples

The positive electrode slurry of the examples and the positive electrode slurry of comparative examples are prepared respectively according to the above method, and various parameters thereof are measured. The results are shown in Table 1 and Table 2 below.

It may be known according to results of Table 1 and Table 2 that the positive electrode slurry in Examples 1 to 46 is prepared by the preparation method for the slurry disclosed in the present application, including first stirring, second stirring and third stirring; wherein in the first stirring, a binder and a solvent are mixed and stirred to prepare a glue solution; in the second stirring, a positive electrode active material and a conductive agent are mixed and stirred with the glue solution to prepare a mixture; in the third stirring, a binder and a solvent are mixed and stirred with the mixture to obtain positive electrode slurry; the binder and the solvent used in the first stirring are respectively the same as the binder and the solvent used in the third stirring, based on a total mass of the binder used in the first stirring and the binder used in the third stirring, a mass ratio of the binder used in the first stirring is 50%-70%, and a mass ratio of the binder used in the third stirring is 30%-50%; and based on a total mass of the solvent used in the first stirring and the solvent used in the third stirring, a mass ratio of the solvent used in the first stirring is 50%-70%, and a mass ratio of the solvent used in the third stirring is 30%-50%.

From the comparison of Examples 1 to 5 and Example 7 with Comparative Examples 1 to 5, it can be seen that the preparation method disclosed in the present application has wide versatility and is suitable for slurry including one or more polyvinylidene fluoride binders with a weight average molecular weight of 0.15 million to 1.5 million. The preparation method is universally applicable to a polyvinylidene fluoride binder with a low weight average molecular weight and a polyvinylidene fluoride binder with a high weight average molecular weight, and helps to reduce preparation costs and improve production efficiency.

It may be seen from Comparative example 4 that in the preparation process in the prior art, for the binder with the weight average molecular weight of 1 million, discharge viscosity of the slurry is difficult to reduce, and a severe gelation phenomenon may occur to the slurry. Through the preparation method disclosed in the present application, the slurry including the binder with the weight average molecular weight of up to 1.5 million still has low discharge viscosity and gelation resistance and can meet use demands of a new generation binder with a high molecular weight.

From the comparison between Examples 6 to 12 and Comparative Example 5, it can be seen that the present application is also applicable to slurry having binders with different weight average molecular weights. Different from the preparation method in the prior art, the preparation method disclosed in the present application can effectively overcome the slurry gelation phenomenon caused by a large difference in the molecular weight of the binder. This preparation method has wider universality.

From the comparison between Example 4 and Example 8, the comparison between Example 10 and Example 5, and the comparison between Example 11 and Example 3, it can be seen that the slurry including binders of different molecular weights prepared by the preparation method of the present application has lower discharge viscosity and better gelation resistance.

It can be seem from Examples 13 to 16 that the solid content of the slurry is controlled to be in a range from 60% to 75%, so that the slurry may have good gelation resistance and sedimentation resistance at the same time.

From the comparison between Examples 3, 17, 18 and Comparative Examples 6 and 7, it can be seen that a proportion of the binder added in the first stirring is controlled to be in a range from 50% to 70% of a total mass of the binder, which may effectively alleviate the gelation of the slurry, improve the storage performance of the slurry, and expand a process window of slurry coating.

From the comparison between Examples 3, 21, 22 and Examples 19 and 20, it can be seen that the revolution velocity of the first stirring is controlled to be in a range from 20 rpm to 40 rpm, which may effectively alleviate the gelation of the slurry, improve the storage performance of the slurry, and expand a process window of slurry coating.

From the comparison between Examples 3, 23 and 24 and Examples 25 and 26, it can be seen that the autorotation velocity of the first stirring is controlled to be in a range from 100 rpm to 800 rpm, so that the slurry may have good gelation resistance and sedimentation resistance at the same time.

From the comparison between Examples 3, 28 and 29 and Examples 27 and 30, it can be seen that the duration of the first stirring is controlled to be in a range from 20 minutes to 50 minutes, so that the slurry may have good gelation resistance and sedimentation resistance at the same time.

From the comparison between Examples 3, 31, 32 and Examples 33 and 34, it can be seen that the autorotation velocity of the second stirring is controlled to be in a range from 800 rpm to 1500 rpm, which may effectively alleviate the gelation of the slurry, improve the storage performance of the slurry, and expand a process window of slurry coating.

From the comparison between Examples 3, 36 and 37 and Examples 35 and 38, it can be seen that the revolution velocity of the second stirring is controlled to be 5 rpm to 10 rpm greater than the revolution velocity of the first stirring, so that the slurry may have good gelation resistance and sedimentation resistance at the same time.

From the comparison between Examples 3, 40 and 41 and Examples 39 and 42, it can be seen that the stirring duration of the second stirring is controlled to be in a range from 30 minutes to 80 minutes, so that the slurry may have good gelation resistance and sedimentation resistance at the same time.

From the comparison between Examples 3, 44 and 45 and Examples 43 and 46, it can be seen that the stirring duration of the third stirring is controlled to be in a range from 100 minutes to 130 minutes, so that the slurry may have good gelation resistance and sedimentation resistance at the same time.

It can be seen from the examples that the viscosity of the positive electrode slurry with a solid content ranging from 60% to 75% disclosed in the present application is in a range from 10000 mPa·s to 30000 mPa·s, and the positive electrode slurry has good coatability and processability.

It needs to be noted that the present application is not limited to the above embodiments. The above-described embodiments are merely illustrative, and embodiments having substantively the same composition as the technical idea and exerting the same effects within the scope of the technical solution of the present application are all included within the technical scope of the present application. In addition, without departing from the scope of the main intention of the present application, various modifications that can be conceived by those skilled in the art are applied to the embodiments, and other modes constructed by combining some of the constituent elements of the embodiments are also included within the scope of the present application.

## Claims

1. A preparation method for a positive electrode slurry, comprising first stirring, second stirring and third stirring;
wherein in the first stirring, a binder and a solvent are mixed and stirred to prepare a glue solution;
in the second stirring, a positive electrode active material and a conductive agent are mixed and stirred with the glue solution to prepare a mixture;
in the third stirring, a binder and a solvent are mixed and stirred with the mixture to obtain the positive electrode slurry;
the binder and the solvent used in the first stirring are respectively the same as the binder and the solvent used in the third stirring; based on a total mass of the binder used in the first stirring and the binder used in the third stirring, a mass ratio of the binder used in the first stirring is 50%-70%, and a mass ratio of the binder used in the third stirring is 30%-50%; and based on a total mass of the solvent used in the first stirring and the solvent used in the third stirring, a mass ratio of the solvent used in the first stirring is 50%-70%, and a mass ratio of the solvent used in the third stirring is 30%-50%.

2. The preparation method for the positive electrode slurry according to claim 1, wherein the binder includes at least one polyvinylidene fluoride with a weight average molecular weight of 0.15 million to 1.5 million.

3. The preparation method for the positive electrode slurry according to claim 1 or 2, wherein the binder at least includes two types of polyvinylidene fluoride, which have weight average molecular weights in a difference of no more than 1.5 million.

4. The preparation method for the positive electrode slurry according to any one of claims 1 to 3, wherein for the first stirring, a revolution velocity is in a range from 20 rpm to 40 rpm, and an autorotation velocity is in a range from 100 rpm to 800 rpm.

5. The preparation method for the positive electrode slurry according to any one of claims 1 to 4, wherein a stirring duration of the first stirring is in a range from 20 minutes to 50 minutes.

6. The preparation method for the positive electrode slurry according to any one of claims 1 to 5, wherein an autorotation velocity of the second stirring is in a range from 800 rpm to 1500 rpm.

7. The preparation method for the positive electrode slurry according to any one of claims 1 to 6, wherein a revolution velocity of the second stirring is 5 rpm to 10 rpm greater than the revolution velocity of the first stirring.

8. The preparation method for the positive electrode slurry according to any one of claims 1 to 7, wherein a stirring duration of the second stirring is in a range from 30 minutes to 80 minutes.

9. The preparation method for the positive electrode slurry according to any one of claims 1 to 8, wherein a stirring duration of the third stirring is in a range from 100 minutes to 130 minutes.

10. The preparation method for the positive electrode slurry according to any one of claims 1 to 9, wherein a solid content of the positive electrode slurry is in a range from 60% to 75%, and viscosity of the positive electrode slurry is in a range from 10000 mPa·s to 30000 mPa·s.

11. The preparation method for the positive electrode slurry according to any one of claims 1 to 10, wherein a ratio of a mass of the positive electrode active material to a total mass of the binder is in a range from 50:1 to 60:1, and a ratio of a mass of the conductive agent to the total mass of the binder is in a range from 0.3:1 to 0.5:1.

12. The preparation method for the positive electrode slurry according to any one of claims 1 to 11, wherein the solvent is one or more of N-methyl-2-pyrrolidone, N,N-dimethylpropionamide, N,N-diethylpropionamide, N,N-dipropylpropionamide, N,N-dibutylpropionamide, N,N-dimethylethylpropionamide and 3-butoxy-N-methylpropionamide.

13. A positive electrode slurry, wherein the positive electrode slurry has a solid content ranging from 60% to 75% and initial viscosity ranging from 10000 mPa·s to 30000 mPa·s, and viscosity of the positive electrode slurry is less than 50000 mPa·s after standing for 24 hours.

14. The positive electrode slurry according to claim 13, wherein the positive electrode slurry comprises at least one polyvinylidene fluoride with a weight average molecular weight of 0.15 million to 1.5 million.

15. The positive electrode slurry according to claim 13 or 14, wherein the binder at least comprises two types of polyvinylidene fluoride, which have weight average molecular weights in a difference of no more than 1.5 million.

16. The positive electrode slurry according to any one of claims 13 to 15, wherein the positive electrode slurry is prepared through the preparation method for the positive electrode slurry according to any one of claims 1 to 12.

17. A secondary battery, comprising a positive electrode plate, a separator, a negative electrode plate and an electrolyte solution, wherein the positive electrode plate is prepared from the positive electrode slurry prepared through the preparation method for the positive electrode slurry according to any one of claims 1 to 12.

18. The secondary battery according to claim 17, wherein the secondary battery is any one of a lithium-ion battery, a sodium-ion battery, a magnesium-ion battery, and a potassium-ion battery.

19. A battery module, comprising the secondary battery according to claim 17 or 18.

20. A battery pack, comprising at least one of the secondary battery according to claim 17 or 18 or the battery module according to claim 19.

21. An electrical apparatus, comprising at least one of the secondary battery according to claim 17 or 18, the battery module according to claim 19 or the battery pack according to claim 20.
